# EUROPÄISCHE PATENTANMELDUNG

(11) **EP 1 683 814 A2**
(43) Veröffentlichungstag der Anmeldung: **26.07.2006**
(21) Anmeldenummer: 06009718.5
(22) Anmeldetag: 26.11.1998
(51) Int. Cl.: C08F 2/34, C08F 2/40, C08F 10/00

(54) **Kontinuierliches Gasphasenpolymerisationsverfahren**

(30) Priorität: 05.01.1998 DE 19800020
(62) Teilanmeldung aus: 98122407.4
(71) Anmelder: Basell Polyolefine GmbH, 50389 Wesseling (DE)
(72) Erfinder: Lange, Armin, 69121 Heidelberg (DE); Micklitz, Wolfgang, 145-0071 Tokyo (JP); Karer, Rainer, 67657 Kaiserslautern (DE); Evertz, Kaspar, 65843 Sulzbach/Taunus (DE); Mihan, Shahram, 65812 Bad Soden (DE); Feindt, Hans-Jacob, Flemington 08822 New Jersey (US); Hecker, Manfred, 53577 Neustadt Wied (DE); Bauer, Peter, 67071 Ludwigshafen (DE); Rosendorfer, Philipp, 67434 Neustadt (DE)

(57) **Zusammenfassung**

Kontinuierliches Gasphasenpolymerisationsverfahren zur Herstellung von Ethylen- und Propenhomopolymerisaten und -copolymerisaten, bei welchem man Ethylen, Propen oder Gemische aus Ethylen oder Propen und C₃- bis C₈-α-Monoolefinen in der Polymerisationszone eines Gasphasenpolymerisationsreaktor bei Drücken von 1 bis 100 bar und Temperaturen von 30 bis 125°C in der Gasphase in einem Bett aus kleinteiligem Polymerisat in Anwesenheit eines Metallocenkatalysators polymerisiert, wobei man das Reaktorgas zur Abführung der Polymerisationswärme im Kreis führt, dadurch gekennzeichnet, dass man zur Verhinderung von Polymerisatbelägen in der Kreisgasleitung in diese Kreisgasleitung ein Katalysatorgift mit einem Siedepunkt oberhalb der höchsten Temperatur innerhalb der Kreisgasleitung in höchstens solch einer Menge zudosiert, dass dadurch die Produktivität des Katalysators im Reaktor nicht wesentlich beeinträchtigt wird.

## Beschreibung

Gegenstand der vorliegenden Erfindung ist ein kontinuierliches Gasphasenpolymerisationsverfahren zur Herstellung von Ethylen- und Propenhomopolymerisaten und -copolymerisaten, bei welchem man Ethylen, Propen oder Gemische aus Ethylen oder Propen und C₃- bis C₈-α-Monoolefinen in der Polymerisationszone eines Gasphasenpolymerisationsreaktors bei Drücken von 1 bis 100 bar und Temperaturen von 30 bis 125°C in der Gasphase in einem Bett aus kleinteiligem Polymerisat in Anwesenheit eines Katalysators polymerisiert, wobei man das Reaktorgas zur Abführung der Polymerisationswärme im Kreis führt.

Weiterhin betrifft die Erfindung die Verwendung von Katalysatorgiften als Mittel zur Verhinderung von Belägen in der Kreisgasleitung von Gasphasenpolymerisationsanlagen.

Gasphasenpolymerisationsverfahren stellen wirtschaftliche Verfahren zur Polymerisation von Ethylen und Propen bzw. zur Copolymerisation von Ethylen oder Propen mit C₃- bis C₈-α-Olefinen dar. Derartige Gasphasenpolymerisationsverfahren können entweder als Gasphasenwirbelschichtverfahren oder als gerührte Gasphasenverfahren ausgeführt werden. Derartige Verfahren werden beispielsweise in EP-A-0 475 603, EP-A-0 089 691 und EP-A-0 571 826 beschrieben.

Charakteristisch für das Gasphasenwirbelschichtverfahren ist, daß das aus polymerisierenden Polymerteilchen bestehende Bett von unten durch eine Gasmischung im fluidisierten Zustand gehalten wird. Durch diese Gasmenge wird außerdem die freiwerdende Polymerisationswärme aus dem Reaktor entfernt. Das Reaktionsgas wird in einem außerhalb des Reaktors liegenden Wärmetauschers abgekühlt und durch eine Gasverteilerplatte wieder in den Reaktor zurückgeführt (Kreisgas).

Durch das zirkulierende Kreisgas wird aber auch eine gewisse Menge von feinteiligem Polymerisat aus dem Reaktor mitgerissen und in das Kreisgassystem überführt. Diese Polymerisatpartikel enthalten aktiven Katalysator und können somit auch im Kreisgassystem weiter polymerisieren. Lagern sich diese Partikel im Kreisgassystem ab, so können an diesen Stellen Beläge und Anwachsungen entstehen. Einerseits können diese Beläge selbst zu Störungen Anlass geben (Verstopfung des Kühlers, Verklebungen am Kompressor), andererseits können aber auch Teile dieser Beläge wieder abplatzen. Dies ist in zweierlei Hinsicht unerwünscht. Durch die abplatzenden Beläge können die Bohrungen der Gasverteilerplatte des Reaktors rasch verstopfen und so eine Abstellung und eine aufwendige Reinigung erfordern. Gelangen derartige Belagsstücke durch die Gasverteilerplatte in den Reaktor, so wird die Produktqualität durch diese Partikel verschlechtert, es bilden sich sogenannte Stippen.

Insbesondere bei Produkten für Folienanwendungen kann es so zum Anfall von nicht spezifikationsgerechtem Material kommen.

Versuche zur Lösung dieses Problems bestanden in der Vergangenheit vor allem darin, den Polymerisatfeinstaubanteil im Kreisgas zu vermindern. Viele Wirbelschichtanlagen enthalten daher zur Abtrennung dieses reaktiven Feinstaubs einen Zyklon hinter dem Reaktorausgang (s. z.B. EP-A-0 301 872). Dieser Zyklon stellt jedoch einen erheblichen apparativen Aufwand dar und zeigt gerade zur Abtrennung sehr feiner Stäube, welche aber oft einen sehr hohen Katalysatoranteil enthalten, oft einen unbefriedigenden Wirkungsgrad.

Der Einsatz von Katalysatorgiften bei Gasphasenwirbelschichtpolymerisationen ist bereits bekannt. So werden Katalysatorgifte beispielsweise zum Abbruch von Polymerisationen (z.B. bei außer Kontrolle geratener Polymerisationsreaktion, s. z.B. EP-A-0 471 497) oder zur Feinregelung der Katalysatoraktivität (s. z.B. EP-A-359 444 oder EP A- 376 559) eingesetzt. In kontinuierlichen Verfahren werden jedoch immer leichtflüchtige Verbindungen, in der Regel Gase wie CO₂, CO oder O₂ eingesetzt, weil ihr Wirkungsort vor allem im Reaktor sein soll und eine gleichmäßige Verteilung im Reaktorraum wünschenswert ist. Zur gezielten Inaktivierung von katalysatorhaltigen Feinstäuben in der Kreisgasleitung sind diese Agenzien im allgemeinen ungeeignet, da sie erheblichen Einfluss auf die Polymerisationsreaktion im Reaktor haben.

Der vorliegenden Erfindung lag daher die Aufgabe zugrunde, eine apparativ einfache Möglichkeit zu finden, die Ausbildung von Polymerisatbelägen in der Kreisgasleitung von Gasphasenpolymerisationsreaktoren zu verhindern, die Laufzeit solcher Anlagen zu verlängern und die Qualität der Polymerisationsprodukte zu erhöhen.

Demgemäß wurde ein kontinuierliches Gasphasenpolymerisationsverfahren zur Herstellung von Ethylen- und Propenhomopolymerisaten und -copolymerisaten, bei welchem man Ethylen, Propen oder Gemische aus Ethylen oder Propen und C₃- bis C₈-α-Monoolefinen in der Polymerisationszone eines Gasphasenpolymerisationsreaktors bei Drücken von 1 bis 100 bar und Temperaturen von 30 bis 125°C in der Gasphase in einem Bett aus kleinteiligem Polymerisat in Anwesenheit eines Katalysators polymerisiert, wobei man das Reaktorgas zur Abführung der Polymerisationswärme im Kreis führt, gefunden, welches dadurch gekennzeichnet ist, dass man zur Verhinderung von Polymerisatbelägen in der Kreisgasleitung in diese Kreisgasleitung ein Katalysatorgift mit einem Siedepunkt oberhalb der höchsten Temperatur innerhalb der Kreisgasleitung in höchstens solch einer Menge zudosiert, dass dadurch die Produktivität des Katalysators im Reaktor nicht wesentlich beeinträchtigt wird.

Weiterhin wurde die Verwendung solcher Katalysatorgifte als Mittel zur Verhinderung von Belägen in der Kreisgasleitung von Gasphasenpolymerisationsanlagen gefunden.

Das erfindungsgemäße Verfahren kann in einem Gasphasenwirbelschichtreaktor durchgeführt werden, wie er beispielsweise in EP-A-0 475 603, EP-A-0 089 691 oder EP-A-0 571 826 im Detail beschrieben wird, oder in einem Gasphasenrührreaktor. Die folgenden Ausführungen beziehen sich überwiegend auf Gasphasenwirbelschichtverfahren, können aber sinngemäß auch auf gerührte Gasphasenpolymerisationsverfahren übertragen werden. Im allgemeinen handelt es sich bei dem Gasphasenwirbelschichtreaktor um ein mehr oder weniger langes Rohr, welches von im Kreis geführtem Reaktorgas durchströmt wird. Im allgemeinen wird das im Kreis geführte Reaktorgas dem unteren Ende des Gasphasenwirbelschichtreaktors zugeführt und an dessen oberen Ende wieder entnommen. Üblicherweise handelt es sich bei dem im Kreis geführten Reaktorgas um eine Mischung aus Ethylen oder Propen, gewünschtenfalls einem Molekulargewichtsregler wie Wasserstoff und Inertgasen wie Stickstoff und/oder gesättigten Kohlenwasserstoffen wie Ethan, Butan oder Hexan. Außerdem kann das Reaktorgas als Comonomere C₃- bis C₈-α-Monoolefine wie Propen, But-1-en, Pent-1-en, 2-Methylpenten, Hex-1-en, Hept-1-en und Oct-1-en enthalten. Bevorzugt ist ein Verfahren, in welchem Ethylen mit 1-Hexen copolymerisiert wird. Die Geschwindigkeit des Reaktorgases muss ausreichend hoch sein, um zum einen das im Rohr befindliche, als Polymerisationszone dienende, durchmischte Schüttgutbett aus kleinteiligem Polymerisat aufzuwirbeln und zum anderen die Polymerisationswärme wirksam abzuführen.

Zur Einstellung gleichbleibender Reaktionsbedingungen können die Bestandteile des Reaktorgases dem Gasphasenwirbelschichtreaktor direkt oder über das im Kreis geführte Reaktorgas zugeführt werden. Für das erfindungsgemäße Verfahren ist es von Vorteil, den Katalysator direkt in das Wirbelbett einzubringen. Hierbei erweist es sich als besonders vorteilhaft, den Katalysator gemäß dem in der DE-A-35 44 915 beschriebenen Verfahren portionsweise mit Stickstoff oder Argon direkt in das Schüttgutbett zu dosieren.

Um das Mitreißen von kleinteiligem Polymerisat aus der Polymerisationszone in das Kreisgassystem zu vermeiden, weist der für das erfindungsgemäße Verfahren verwendete Gasphasenwirbelschichtreaktor an seinem oberen Ende eine Beruhigungszone mit erweitertem Durchmesser auf, welche die Kreisgasgeschwindigkeit reduziert. Im allgemeinen empfiehlt es sich, die Kreisgasgeschwindigkeit in dieser Beruhigungszone auf ein Drittel bis ein Sechstel der Kreisgasgeschwindigkeit in der Polymerisationszone zu verringern.

Das im Kreis geführte Reaktorgas wird nach seinem Austritt aus dem Gasphasenwirbelschichtreaktor einem Kreisgasverdichter (Kompressor) und einem Kreisgaskühler zugeführt, wobei für die Reihenfolge dieser Aggregate beide Möglichkeiten in Betracht kommen. Hiernach wird das gekühlte und verdichtete Kreisgas über einen üblichen und bekannten Gasverteilerboden wieder in das durchmischte Schüttgutbett des Gasphasenwirbelschichtreaktors eingeleitet. Hierdurch resultiert eine weitestgehend homogene Gasverteilung, welche eine gute Durchmischung des Schüttgutbetts gewährleistet.

Auch bei dem erfindungsgemäßen Verfahren bestimmen die Verhältnisse der Ausgangsprodukte, insbesondere aber das Verhältnis von Ethylen zu C₃- bis C₈-α-Monoolefinen die Dichte der resultierenden Copolymerisate.

Des weiteren bestimmt die Menge des zudosierten Katalysators den Produktausstoß des Gasphasenwirbelschichtreaktors. Dessen Kapazität wird bekanntermaßen durch die Kühlkapazität des im Kreis geführten Reaktorgases begrenzt. Diese Kühlkapazität richtet sich zum einen nach dem Druck, unter dem das Reaktorgas steht bzw. bei dem die (Co)Polymerisation durchgeführt wird. Hier empfiehlt es sich im allgemeinen bei Drücken von 1 bis 100, vorzugsweise 10 bis 80 und insbesondere 15 bis 50 bar zu arbeiten. Außerdem richtet sich die Kühlkapazität nach der Temperatur, bei welcher die (Co)Polymerisation in dem Wirbelbett durchgeführt wird. Für das erfindungsgemäße Verfahren ist es vorteilhaft, bei Temperaturen von 30 bis 125°C zu arbeiten, besonders bevorzugt zwischen 70 und 115 °C, wobei für Copolymere höherer Dichte vorzugsweise Temperaturen im oberen Teil dieses Bereichs, für Copolymere niedrigerer Dichte vorzugsweise Temperaturen im unteren Teil dieses Bereichs eingestellt werden.

Neben der Temperatur hat auch der Anteil von Inertgasen wie Stickstoff oder Kohlenwasserstoffen Einfluss auf die Gefahr des Auftretens von Verklebungen und Ablagerungen. Hohe Inertgasanteile können die Ablagerungsgefahr verringern, zugleich jedoch auch die Raum-Zeit-Ausbeute beeinträchtigen, so dass das Verfahren unwirtschaftlich werden kann. Nach dem erfindungsgemäßen Verfahren beträgt der Inertgasanteil vorzugsweise 25 bis 55 Vol.-%, besonders bevorzugt 35 bis 50 Vol.-%, bezogen auf das Gesamtvolumen des Reaktionsgases.

Als Katalysatoren kommen alle bekannten Katalysatoren in Betracht, wie sie zur Ethylen- und Propen- (Co)polymerisation üblicherweise eingesetzt werden, also beispielsweise Ziegler-Natta-Katalysatoren, Chromkatalysatoren oder Metallocenkatalysatoren. Diese Katalysatoren einschließlich erforderlicher oder vorteilhafter Cokatalysatoren und Aktivatoren sind dem Fachmann bekannt. Im allgemeinen werden diese Katalysatoren in geträgerter Form, beispielsweise auf Trägermaterialien wie anorganischen Oxiden (z.B. MgO oder Kieselgel) oder organischen Polymeren (z.B. Polyethylenpartikel) eingesetzt.

Als Katalysatorgifte, wie sie erfindungsgemäß eingesetzt werden, kommen alle Verbindungen in Betracht, die einen Siedepunkt oberhalb der höchsten Temperatur innerhalb der Kreisgasleitung aufweisen. Die Katalysatorgifte können dabei von ganz unterschiedlicher chemischer Natur sein.

Wichtig ist, dass sie einerseits bei den Temperaturen, wie sie in der Kreisgasleitung und an den Eingangsöffnungen des Reaktorbodens herrschen, einen geringen Dampfdruck besitzen, und andererseits funktionelle Gruppen tragen, welche eine stärkere Koordinationskaft als Ethylen gegenüber den aktiven Zentren der Katalysator-Metallatome zeigen und so den Katalysator möglichst irreversibel inhibieren. Das erste Erfordernis, also der niedrige Dampfdruck, hängt vor allem vom Molekulargewicht ab, so dass beispielsweise oligomere und polymere Stoffe mit geeigneten funktionellen Gruppen gute Wirksamkeit zeigen. Gut geeignete Katalysatorgifte im Sinne der vorliegenden Erfindung haben in der Regel ein Molekulargewicht von über 100, vorzugsweise von über 150 und besonders bevorzugt von über 200.

Hinsichtlich des zweiten Erfordernisses, der geeigneten funktionellen Gruppen, ist ein Verfahren bevorzugt, indem man als Katalysatorgift eine Verbindung oder ein Gemisch von Verbindungen zudosiert, die mindestens eine der funktionellen Gruppen -NR₂, -NR-, -OR, -0-, =0, -OS, -S- und =S enthalten, wobei R Wasserstoff oder einen Alkylrest mit 1 bis 8 C-Atomen bedeutet. Besonders geeignet sind Verbindungen, die mehrere solcher funktioneller Gruppen tragen, wobei diese Gruppen gleich oder verschieden sein können.

Als Reste R ist dabei Wasserstoff bevorzugt, aber auch Alkylreste wie Methyl, Ethyl, Propyl, Isopropyl und Butyl sowie die verschiedenen C₅-C₈-Alkylreste sind geeignet, wobei Methyl und Ethyl bevorzugt sind.

Vorzugsweise werden solche Katalysatorgifte eingesetzt, die einen Dampfdruck bei 20°C von weniger als 10 000 Pa, besonders bevorzugt von weniger als 2000 Pa und ganz besonders von weniger als 1000 Pa aufweisen. Besonders zu nennen ist beispielsweise das kommerziell erhältliche Alkylaminoethoxylat Atmer 163 (Hersteller ICI).

Die Menge des zuzudosierenden Katalysatorgifts kann nicht allgemein angegeben werden, sondern hängt vom Giftstoff, vom Katalysator- bzw. Cokatalysatorsystem, vom Feinstaubanfall und den Reaktionsbedingungen ab. Es ist notwendig, die optimale Menge experimentell zu ermitteln. Dabei geht man vorteilhaft so vor, dass man die Katalysatorgiftmenge sukzessiv erhöht, bis ein Einfluss auf die Katalysatorproduktivität spürbar wird und dann die Menge wieder etwas reduziert. Da die genaue Menge an zu desaktivierendem Feinstaub nicht bekannt ist, kann näherungsweise soviel Katalysatorgift in die Kreisgasleitung dosiert werden, dass diese Menge, bezogen auf den Produktausstoß, etwa 0,4 ppm beträgt.

Das Katalysatorgift kann in reiner Form oder, vorzugsweise, in verdünnter, am besten in gelöster Form in die Kreisgasleitung dosiert werden. Als Verdünnungsmittel kommen alle Mittel in Betracht, die mit dem Polymerisationsverfahren kompatibel sind. Als besonders vorteilhaft hat sich ein Verfahren erwiesen, bei dem das Katalysatorgift als Lösung in einem C₃- bis C₈-α-Monoolefin, in die Kreisgasleitung eingespeist wird, wobei natürlich in der Regel das jeweilige Comonomer benutzt wird.

In einer Ausführungsform des erfindungsgemäßen Verfahrens wird das Katalysatorgift gemeinsam mit einer oberflächenaktiven Verbindung in die Kreisgasleitung eingespeist. Als oberflächenaktive Substanzen können z.B. Fettalkoholethoxylate, Polyalkylenglykole oder Ethylenoxid-Propylenoxid-Blockcopolymerisate eingesetzt werden. Weitere geeignete Verbindungen sind dem Fachmann bekannt. Durch die oberflächenaktiven Substanzen wird die Benetzbarkeit des Feinstaubs durch die Katalysatorgiftflüssigkeit erhöht und so die Wirksamkeit der Katalysatorgifte verbessert.

Vorteilhaft ist weiterhin eine Ausführungsform, bei welcher das Katalysatorgift an einer Position nach dem Reaktor, aber vor dem Kühler und dem Kompressor, in die Kreisgasleitung eingespeist wird.

Durch die erfindungsgemäße Verwendung von Katalysatorgiften zur Verhinderung von Belägen in der Kreisgasleitung von Gasphasenwirbelschichtpolymerisationsanlagen ist es möglich, die Laufzeit solcher Anlagen signifikant zu verlängern ohne dabei die Produktivität des Katalysators zu beeinträchtigen. Beispiele

Die folgenden Beispiele belegen exemplarisch die Wirkung eines in die Kreisgasleitung dosierten Katalysatorgifts geringer Flüchtigkeit bei der Herstellung eines MDPE-Folienprodukts (Ethylen-Hexen-1 -Copolymer, Dichte 0,937 g/cm³, Schmelzefließrate MFR (21 ,6/190°C) 12 - 14 g/10 min) mit einem Chrom-Katalysator (Kieselgelträger, 0,2 Gew.- % Chrom) im Gasphasenwirbelschichtverfahren.

Als Katalysatorgift diente dabei ATMER 163 (Hersteller: ICI), ein kommerziell verfügbares Alkylaminoethoxylat. Der Dampfdruck der Verbindung bei 20°C beträgt 600 Pa.

### Beispiel 1 :

In einem Produktionsreaktor wurde bei einem Ausstoß von 7,5 t/h und einem Reaktordruck von 21 bar das oben beschriebene MDPE-Folienprodukt hergestellt. In die Kreisgasleitung wurde unmittelbar nach dem Eintritt des Reaktorgases in die Kreisgasleitung eine Lösung von Atmer 163 in Hexen-1 dosiert. Dazu wurde das ATMER 163 in Hexen-1 vorgelöst (Gehalt 0,2 Gew.-%) und dann zusammen mit dem für die Herstellung des Ethen-Hexen-1-Copolymers benötigten Hexen-1 über eine Düse in die Kreisgasleitung dosiert. Die Dosiermenge ATMER 163 betrug 3 g/h. Bezogen auf den Reaktorausstoß entspricht dies einer Menge von 0,4 ppm. Die Produktivität des Katalysators veränderte sich durch diese Dosierung nicht und lag bei einer mittleren Verweilzeit von 3,0 h bei 9000 g Polymer/g Katalysator.

Auch nach einer Polymerisationsdauer von 3 Monaten stieg der Differenzdruck des Siebbodens nicht signifikant an. Die Foliennote verschlechterte sich während des gesamten Laufs nicht.

### Vergleichsbeispiel V1

In einem Produktionsreaktor wurde bei einem Ausstoß von 7,5 t/h und einem Reaktordruck von 21 bar das oben beschriebene MDPE-Folienprodukt hergestellt. Die Produktivität des Katalysators lag bei einer Verweilzeit von 3,0 h bei 9000 g Polymer/g Katalysator. Nach einer Polymerisationsdauer von etwa 4 Wochen stieg der Differenzdruck des Siebbodens so stark an, daß der Reaktor abgestellt werden muss. Innerhalb der Kreisgasleitung hatten sich Beläge gebildet und Teile dieser Beläge hatten die Öffnungen des Gasverteilerbodens verstopft. Die Foliennote hatte sich während des gesamten Laufs verschlechtert. Teilweise waren Chargen außerhalb der Spezifikation hinsichtlich Stippenbeurteilung.

### Beispiel 2:

Um die Auswirkung der Dosierung von flüchtigen (nicht erfindungsgemäßen, Vergleichsbeispiel V2) und schwerflüchtigen (erfindungsgemäßen) Katalysatorgiften in die Kreisgasleitung zu demonstrieren, wurde in einem Technikumsreaktor polymerisiert (Reaktordurchmesser 0,s m, Länge der Reaktionszone 4,40 m, Produktausstoß ca. 50 kg/h).

Als weiterer Vergleichsversuch V3 wurde die Polymerisation ohne jede Katalysatorgiftzugabe durchgeführt. Dosierung von ATMER 163: 0,2 Gew.-% in Hexen vorgelöst, Dosierung zusammen mit dem für die Polymerisation benötigten Hexen-1 in die Kreisgasleitung.

Für den Vergleichsversuch V2 wurde O₂, verdünnt mit Stickstoff, in die Kreisgasleitung zudosiert.

Die Ergebnisse zeigt Tabelle 1:

**Tabelle 1: Wirkung von schwer- bzw. leichtflüchtigen Katalysatorgiften**

| Bsp. | Katalysatorgift | Katalysatorproduktivität [g Polymer/g Katalysator] | Schüttgewicht [g/l] | MFR (21,6/190°C) [g/10 min] |
|---|---|---|---|---|
| 2 | 0,4 ppm Atmer 163 | 4400 | 500 | 13,5 |
| V2 | 0,4 ppm O₂ | 2700 | 385 | 17,5 |
| V3 | | 4400 | 500 | 13,0 |

## Patentansprüche

1. Kontinuierliches Gasphasenpolymerisationsverfahren zur Herstellung von Ethylenhomopolymerisaten und -copolymerisaten, bei welchem man Ethylen oder Gemische aus Ethylen und Monoolefinen ausgewählt aus But-1-en, Pent-1-en, 2-Methylpenten, Hex-1-en, Hept-1-en und Oct-1-en in der Polymerisationszone eines Gasphasenpolymerisationsreaktors bei Drücken von 1 bis 100 bar und Temperaturen von 30 bis 125°C in der Gasphase in einem Bett aus kleinteiligem Polymerisat in Anwesenheit eines Metallocenkatalysators in geträgerter Form polymerisiert, wobei man das Reaktorgas zur Abführung der Polymerisationswärme im Kreis führt, **dadurch gekennzeichnet, dass** man zur Verhinderung von Polymerisatbelägen in der Kreisgasleitung in diese Kreisgasleitung an einer Position nach dem Reaktor, aber vor dem Kühler und dem Kompressor ein Katalysatorgift mit einem Siedepunkt oberhalb der höchsten Temperatur innerhalb der Kreisgasleitung und mit einem Molekulargewicht größer als 100 g/mol in höchstens solch einer Menge zudosiert, dass **dadurch** die Produktivität des Katalysators im Reaktor nicht wesentlich beeinträchtigt wird.

2. Kontinuierliches Gasphasenpolymerisationsverfahren nach Anspruch 1, **dadurch gekennzeichnet, dass** die Polymerisation in einem Wirbelschichtreaktor vorgenommen wird.

3. Kontinuierliches Gasphasenpolymerisationsverfahren nach den Ansprüchen 1 oder 2, **dadurch gekennzeichnet, dass** das Katalysatorgift als Lösung in einem C₃- bis C₈-α-Monoolefin in die Kreisgasleitung eingespeist wird.

4. Kontinuierliches Gasphasenpolymerisationsverfahren nach den Ansprüchen 1 bis 3, **dadurch gekennzeichnet, dass** das Katalysatorgift gemeinsam mit einer oberflächenaktiven Verbindung, ausgewählt aus der Gruppe der Fettalkoholethoxylate, Polyalkylenglykole oder Ethylenoxid-Propylenoxid-Blockcopolymerisate in die Kreisgasleitung eingespeist wird.

5. Kontinuierliches Gasphasenpolymerisationsverfahren nach den Ansprüchen 1 bis 4, **dadurch gekennzeichnet, dass** das Katalysatorgift in einer Menge, bezogen auf den Produktausstoss, von 0,4 ppm zudosiert wird.

6. Kontinuierliches Gasphasenpolymerisationsverfahren nach den Ansprüchen 1 bis 5, **dadurch gekennzeichnet, dass** als Katalysatorgift das Alkylaminoethoxylat Atmer 163 eingesetzt wird.
